# EUROPEAN PATENT APPLICATION

(11) **EP 4 826 961 A1**
(43) Date of publication of application: **21.10.2026**
(21) Application number: 23961364.9
(22) Date of filing: 12.12.2023
(51) Int. Cl.: H02K 1/18, H02K 1/20

(54) **STATOR CORE ASSEMBLY AND ROTARY ELECTRIC MACHINE**

(71) Applicant: Mitsubishi Generator Co., Ltd., Kobe City, Hyogo 652-8555 (JP)
(72) Inventor: MURAMATSU, Seijiro, Tokyo 100-8332 (JP); ITO, Daisuke, Tokyo 100-8332 (JP); NAKAMURA, Yoko, Tokyo 100-8332 (JP)
(74) Representative: Witte, Weller & Partner Patentanwälte mbB
(86) International application number: PCT/JP2023/044325
(87) International publication number: WO 2025/126295

(57) **Abstract**

A stator for a rotary electric machine includes a stator core including a plurality of laminated electromagnetic steel sheets, and a plurality of end duct spacers disposed at intervals in a circumferential direction of the rotary electric machine and pressing an end surface on one side of the stator core in an axial direction of the rotary electric machine, wherein a plurality of slots for installing stator coils are formed in an inner circumferential surface of the stator core at intervals in the circumferential direction, the plurality of end duct spacers include a first end duct spacer disposed at a position shifted from a range where each of the slots is formed in the circumferential direction, and if an innermost position in a radial direction of the rotary electric machine, in a contact surface contacting the plurality of end duct spacers on the end surface of the stator core, is denoted as a contact-surface inner end position, an inner end of the first end duct spacer in the radial direction is positioned inward of the contact-surface inner end position in the radial direction.

## Description

### TECHNICAL FIELD

The present disclosure relates to a stator core assembly and a rotary electric machine.

### BACKGROUND ART

In general, a stator of a large-sized rotary electric machine such as a turbine generator installed in a thermal power plant or a nuclear power plant has a stator core and stator coils (stator winding), and the stator core is formed by laminating a plurality of electromagnetic steel sheets (e.g., silicon steel sheets) (e.g., see Patent Document 1). The plurality of electromagnetic steel sheets of the stator core are laminated with insulation added to both sides of each sheet, so that the adjacent sheets are electrically insulated from each other. The stator core is clamped at both ends in the axial direction of the rotary electric machine by ring-shaped clamps through a plurality of end duct spacers so that the plurality of electromagnetic steel sheets are integrally retained.

A plurality of slots (grooves) are formed in the inner circumferential surface of the stator core, the stator coils are embedded in the slots, and the stator coils are fixed by wedges. The stator coils embedded in the slots are electrically connected on an axial-direction outer side of the stator core at axial-direction ends of the stator coils (coil end part).

The end duct spacers and the electromagnetic steel sheets are electrically integrated through spot welding in one design and are insulated from each other in another design. According to findings of the inventors of the present application, in the insulated design, insulation breakdown between the end duct spacers and the electromagnetic steel sheets leads to electrical conduction, causing the insulation-broken area to be overheated due to eddy current caused by a leakage flux at a core end part.

### CITATION LIST

### PATENT DOCUMENT

Patent Document 1: Japanese Laid-Open Patent Publication No. 2003-219583

### SUMMARY OF THE INVENTION

### PROBLEM TO BE SOLVED BY THE INVENTION

A short circuit between an end duct spacer and an electromagnetic steel sheet might cause local overheating. To conduct the repair, it is necessary to create a gap between the end duct spacer and the electromagnetic steel sheet for inserting a new insulating sheet or applying insulating paint. However, since the stator coils are inserted into the stator core, creating a gap between the end duct spacer and the electromagnetic steel sheet after completion of a generator involves a risk of damaging the stator coils. A usual repair practice is to remove all the stator coils and move the end duct spacer in the axial direction for creating a gap between the end duct spacer and the electromagnetic steel sheet, but it takes significant time and costs. In this regard, Patent Document 1 does not disclose any findings for suppressing a short circuit between an end duct spacer and an electromagnetic steel sheet due to insulation breakdown between the end duct spacer and the electromagnetic steel sheet.

In view of the above circumstances, an object of at least one embodiment of the present disclosure is to provide a stator core assembly and a rotary electric machine which can suppress a short circuit between an end duct spacer and an electromagnetic steel sheet due to insulation breakdown between the end duct spacer and the electromagnetic steel sheet.

### MEANS TO SOLVE THE PROBLEM

In order to attain the above-described object, a stator core assembly according to at least one embodiment of the present disclosure is a stator core assembly for a rotary electric machine, including: a stator core including a plurality of laminated electromagnetic steel sheets, each electromagnetic steel sheet having an insulating layer formed on both surfaces thereof; and a plurality of end duct spacers disposed at intervals in a circumferential direction of the rotary electric machine and pressing an end surface on one side of the stator core in an axial direction of the rotary electric machine, wherein a plurality of slots for installing stator coils are formed in an inner circumferential surface of the stator core at intervals in the circumferential direction, the plurality of end duct spacers include a first end duct spacer disposed at a position shifted from a range where each of the slots is formed in the circumferential direction, and if an innermost position in a radial direction of the rotary electric machine, in a contact surface contacting the plurality of end duct spacers on the end surface of the stator core, is denoted as a contact-surface inner end position, an inner end of the first end duct spacer in the radial direction is positioned inward of the contact-surface inner end position in the radial direction.

In order to attain the above-described object, a rotary electric machine according to at least one embodiment of the present disclosure includes the stator core assembly and a rotor.

### EFFECT OF THE INVENTION

At least one embodiment of the present disclosure provides a stator unit and a rotary electric machine which can suppress a short circuit between an end duct spacer and an electromagnetic steel sheet due to insulation breakdown between the end duct spacer and the electromagnetic steel sheet.

### BRIEF DESCRIPTION OF THE DRAWINGS

[FIG. 1] FIG. 1 is a perspective partial cutaway view showing a schematic configuration of a rotary electric machine 100.
[FIG. 2] FIG. 2 schematically shows a cross section of a part, along the axial direction, of a stator core 2.
[FIG. 3] FIG. 3 is a sectional view showing an axial-direction end structure of the rotary electric machine 100 when a part of a cross section, along the axial direction, of the rotary electric machine 100 is viewed from a lateral direction (a direction orthogonal to a vertical surface including the rotation axis of the rotary electric machine 100).
[FIG. 4] FIG. 4 is a perspective sectional view when the axial-direction end structure of the rotary electric machine 100 is viewed in perspective.
[FIG. 5] FIG. 5 is a view showing the positional relationship between a plurality of end duct spacers 22 and an end surface 34 of the stator core 2 when a surface V indicated by a broken line is viewed in a direction from an arrow A in FIG. 3, i.e., a view showing the arrangement between the plurality of end duct spacers 22 and the end surface 34 of the stator core 2 when viewed, along the axial direction, from an outer side (a side opposite the stator core 2 across the end duct spacers 22) in the axial direction.
[FIG. 6] FIG. 6 is an enlarged view of an X part in FIG. 3 (the inner circumferential end part at an abutment part between an end duct spacer 22 and an axial-direction end 33 of the stator core 2).
[FIG. 7] FIG. 7 is a sectional view showing an axial-direction end structure of a rotary electric machine according to a comparative embodiment when a part of a cross section, along the axial direction, of the rotary electric machine is viewed from a lateral direction (a direction orthogonal to a vertical surface including the rotation axis of the rotary electric machine).
[FIG. 8] FIG. 8 is a view showing the positional relationship between a plurality of end duct spacers 22 and an end surface 34 of a stator core 2 when a surface V indicated by a broken line is viewed in a direction from an arrow A in FIG. 7.
[FIG. 9] FIG. 9 is an enlarged view of an X part in FIG. 7 (the inner circumferential end part at an abutment part between an end duct spacer 22 and an axial-direction end 33 of the stator core 2).
[FIG. 10] FIG. 10 illustrates a structure in which an end plate 36 and the plurality of end duct spacers 22 are integrally formed as one component.

### DESCRIPTION OF EMBODIMENTS

Hereinafter, some embodiments of the present disclosure will be described with reference to the accompanying drawings. It is noted that dimensions, materials, shapes, relative arrangement, and the like of constituent components described in the embodiments or shown in the drawings are not intended to restrict the scope of the present disclosure thereto, but are mere explanatory examples.

For example, an expression of relative or absolute arrangement such as "in a direction", "along a direction", "parallel", "orthogonal", "centered", "concentric", and "coaxial" shall not be construed as indicating only the arrangement in a strict literal sense, but also includes a state where the arrangement is relatively displaced by a tolerance, or by an angle or a distance whereby it is possible to achieve the same function.

For example, an expression of an equal state such as "same", "equal", and "uniform" shall not be construed as indicating only the state where the feature is strictly equal, but also includes a state where there is a tolerance or a difference that can still achieve the same function.

For example, an expression of a shape such as a rectangular shape or a cylindrical shape shall not be construed as only the geometrically strict shape, but also includes a shape with unevenness or chamfers within the range in which the same effect can be achieved.

On the other hand, an expression such as "comprise", "include", "have", "contain", and "constitute" are not intended to be exclusive of other components.

First, the configuration of a rotary electric machine 100 according to one embodiment of the present disclosure will be described.

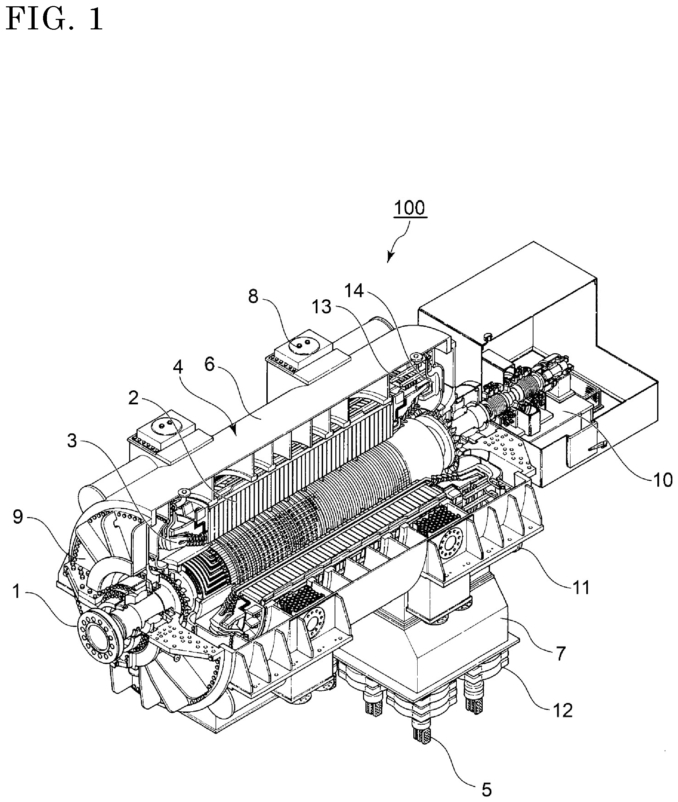

FIG. 1 is a perspective partial cutaway view showing a schematic configuration of the rotary electric machine 100. For convenience of description, a part of the rotary electric machine 100 is removed in FIG. 1.

In general, rotary electric machines are roughly categorized into three types in accordance with an output

(capacity) of the rotary electric machine, namely, a water-cooled rotary electric machine which cools the inside of the machine by hydrogen gas and cools a stator coil by water, a hydrogen-cooled rotary electric machine which cools the inside of the machine and a stator coil by hydrogen gas, and an air-cooled rotary electric machine which cools the inside of the machine and a stator coil by air. Insides of the water-cooled rotary electric machine and the hydrogen-cooled rotary electric machine are filled with pressurized hydrogen gas.

In the rotary electric machine (turbine generator) 100 according to the present embodiment, the inside of the machine is filled with hydrogen gas so that the inside of the machine is cooled by the hydrogen gas.

The rotary electric machine 100 includes a rotor 1 and a stator 4 disposed so as to face the outer circumferential surface of the rotor 1 at a predetermined interval from the rotor 1. The stator 4 includes a stator core 2 and stator coils 3.

In the following description, the "axial direction" refers to the axial direction of the rotary electric machine 100 (the axial direction of the rotor 1, i.e., the axial direction of the stator 4) unless specifically indicated, the "radial direction" refers to the radial direction of the rotary electric machine 100 (the radial direction of the rotor 1, i.e., the radial direction of the stator 4) unless specifically indicated, and the "circumferential direction" refers to the circumferential direction of the rotary electric machine 100 (the circumferential direction of the rotor 1, i.e., the circumferential direction of the stator 4) unless specifically indicated.

The rotary electric machine 100 includes: a high-voltage bushing (power supply terminal) 5 which outputs current from the stator coils 3 to the outside of the machine; power lines such as a connection line 13 and a lead-out line 14 which connect the stator coils 3 and the high-voltage bushing 5 to form a current path; a rotary electric machine casing 6 in which the rotor 1, the stator 4, the connection line 13, the lead-out line 14, and the like are stored and the inside of which is filled with hydrogen gas; a terminal box 7 connected to the rotary electric machine casing 6 and installed below the rotary electric machine casing 6; a hydrogen cooler 8 which is connected to the rotary electric machine casing 6 and is for cooling the inside of the machine by hydrogen gas; an end bracket 9 which closes an axial-direction end of the rotary electric machine casing 6 and stores a bearing or the like; a rocker device 10 which stores a carbon brush and a collector ring through which direct current is supplied to a coil of the rotor 1; a foot 11 to which the rotary electric machine casing 6 is fixed; and a current transformer 12 which measures current outputted from the high-voltage bushing 5 to the outside of the machine.

The rotary electric machine 100 is connected to, for example, a steam turbine or a gas turbine, transmits rotational energy of the steam turbine or the gas turbine to the rotor 1, and rotates the rotor 1 at a high speed inside the stator 4 to generate power. The stator 4 includes the stator core 2 and the stator coils 3.

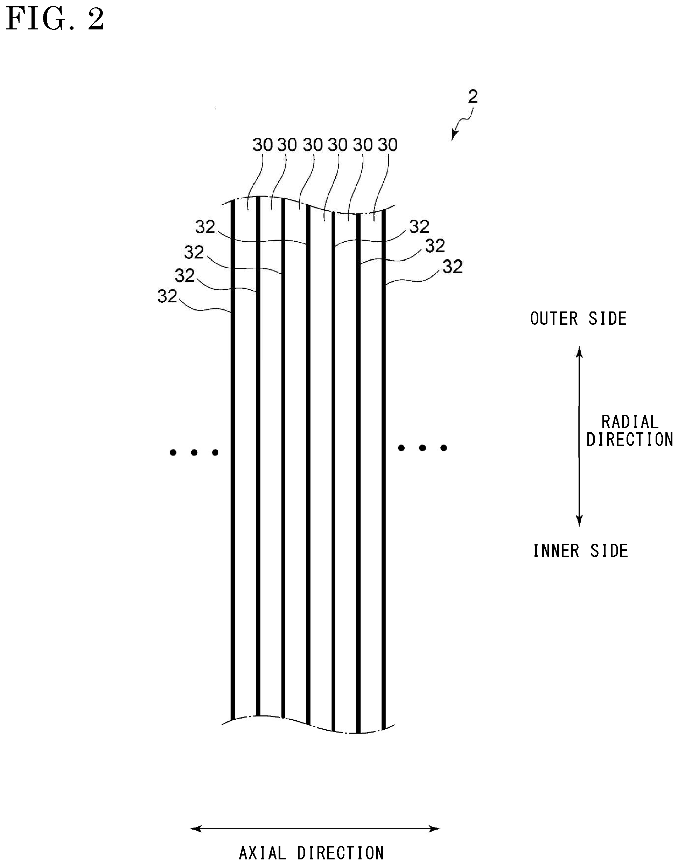

FIG. 2 schematically shows a cross section of a part, along the axial direction, of the stator core 2. As shown in FIG. 2, the stator core 2 includes a plurality of silicon steel sheets 30 (a plurality of electromagnetic steel sheets) laminated in the axial direction. Each of the plurality of silicon steel sheets 30 has an insulating layer 32 formed on each of both surfaces thereof, and the adjacent silicon steel sheets 30 are electrically insulated from each other by the insulating layer 32. Each of the plurality of silicon steel sheets 30 may have a thickness of, for example, 1 mm or smaller (e.g., approximately 0.35 to 0.50 mm).

Next, an axial-direction end structure of the rotary electric machine 100 viewed from a lateral direction and in perspective will be described.

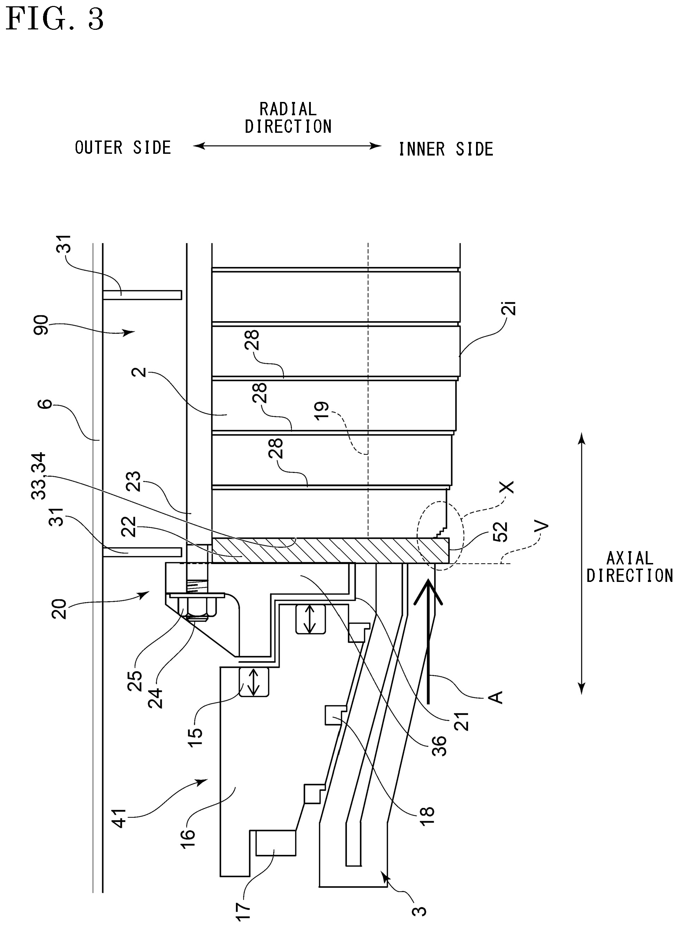

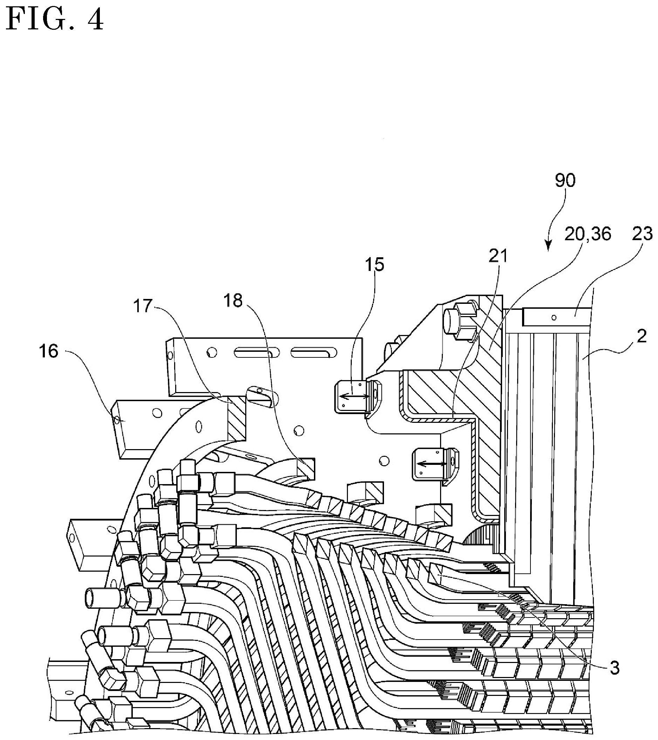

FIG. 3 is a sectional view showing an axial-direction end structure of the rotary electric machine 100 when a part of a cross section, along the axial direction, of the rotary electric machine 100 is viewed from a lateral direction (a direction orthogonal to a vertical surface including the rotation axis of the rotary electric machine 100). FIG. 4 is a perspective sectional view when the axial-direction end structure of the rotary electric machine 100 is viewed in perspective.

As partially shown in FIG. 3 and FIG. 4, end plates 36 of core clamps 20 for clamping the plurality of silicon steel sheets 30, which constitute the stator core 2, from both sides of the stator core 2 in the axial direction (the lamination direction of the silicon steel sheets 30) are installed at axial-direction both ends of the rotary electric machine 100, and a plurality of end duct spacers 22, through which an axial-direction compression force (a compression force of the core clamps 20) is transmitted to the stator core 2, are installed between each of the end plates 36 and the stator core 2. The plurality of end duct spacers 22 provided along an end surface 34 on one side of the stator core 2 in the axial direction are disposed at intervals in the circumferential direction and are configured to press the end surface 34 on the one side of the stator core 2 in the axial direction by means of the compression force of the core clamps 20. A plurality of end duct spacers 22 provided along an end surface (not shown) on the other side of the stator core 2 in the axial direction are disposed at intervals in the circumferential direction and are configured to press the end surface on the other side of the stator core 2 in the axial direction by means of the compression force of the core clamps 20. That is, a pair of end plates 36 of the core clamps 20 are configured to clamp the stator core 2 through the plurality of end duct spacers 22 on both sides of the stator core 2 in the axial direction.

A key bar 23 (a support bar as a support member) that supports the stator core 2 from the outer circumferential side is installed on the outer circumferential side of the stator core 2. Axial-direction both ends of the key bar 23 are fixed (bolt-fastened) to the end plates 36 via a key bar bolt 24 and a key bar nut 25. That is, the key bar 23, and the key bar bolt 24 and the key bar nut 25 provided at each of both ends of the key bar 23 compress the axial-direction both ends of the stator core 2 (more specifically, the outer circumferential-side parts at the axial-direction both ends of the stator core 2) in the axial direction via the pair of end plates 36 respectively provided at both ends of the key bar 23. In other words, the key bar 23, the key bar bolt 24 and the key bar nut 25 provided at each of both ends of the key bar 23, and the pair of end plates 36 provided at both ends of the key bar 23 constitute the core clamps 20 which clamp the plurality of silicon steel sheets 30, which constitute the stator core 2, from both sides of the stator core 2 in the axial direction (the lamination direction of the silicon steel sheets 30). The plurality of end duct spacers 22 serve the role of transmitting the compression force of the core clamps 20 to the stator core 2.

The stator core 2, the plurality of end duct spacers 22 pressing the end surface 34 on the one side of the stator core 2 in the axial direction, the plurality of end duct spacers 22 pressing the end surface (not shown) on the other side of the stator core 2 in the axial direction, and the core clamps 20 clamping the stator core 2 through the plurality of end duct spacers 22 on both sides of the stator core 2 in the axial direction constitute a stator core assembly 90. It is noted that the configurations at both ends of the stator core assembly 90 in the axial direction are basically the same (symmetry), and thus, in the present disclosure, the description of the configuration at an end on one side of the stator core assembly 90 in the axial direction also includes the description of the configuration at an end on the other side of the stator core assembly 90 in the axial direction.

A stator main plate 31 and the rotary electric machine casing 6, inside of which is filled with hydrogen gas, are installed on the outer circumferential side of the key bar 23 (on the outer circumferential side of the stator core 2). The stator main plate 31 forms a predetermined space inside the rotary electric machine casing 6 and supports the rotary electric machine casing 6. In addition, a plurality of stator main plates 31 are installed inside the rotary electric machine casing 6 at predetermined intervals in the axial direction, and the plurality of stator main plates 31 are each formed in a ring shape.

Meanwhile, on an axial-direction outer side of the stator core 2, the stator coils 3 have curved shapes, are tied by roving of glass fiber to a permanent ring 17 and a support ring 18 integrally provided to an axial support 16 fixed to the end plate 36, and are fixed using epoxy varnish.

Then, the stator coils 3 are electrically connected on the axial-direction outer side of the stator core 2 at axial-direction ends of the stator coils 3.

Accordingly, a coil end support 41 (coil end part) composed of the axial support 16, the permanent ring 17, and the support ring 18 is fixed to the end plate 36 installed on an axial-direction end 33 (an end on one side of the stator core 2 in the axial direction) of the stator core 2.

On the axial-direction outer side of the stator core 2, the axial-direction ends of the stator coils 3 are fixed by, for example, a glass laminate sheet, a non-magnetic metal, or glass fiber and/or epoxy varnish to form the coil end support 41.

A copper shield 21 is installed between the axial support 16 and the end plate 36, and the axial support 16 is fixed to the end plate 36 through the copper shield 21.

A slide bearing 15 through which an axial-direction compression force is transmitted to the stator core 2 is installed outside the copper shield 21. It is noted that the slide bearing 15 is installed on the axial support 16 and absorbs the thermal expansion difference between the stator coils 3 and the stator core 2 caused by temperature increase in the stator coils 3.

A plurality of intermediate ducts 28 are installed in the stator core 2 at predetermined intervals in the axial direction. The intermediate ducts 28 are gaps through which hydrogen gas circulates, and may be formed between the adjacent silicon steel sheets 30 for every predetermined number of the plurality of silicon steel sheets 30 constituting the stator core 2. The intermediate ducts 28 are formed of, for example, an H-steel.

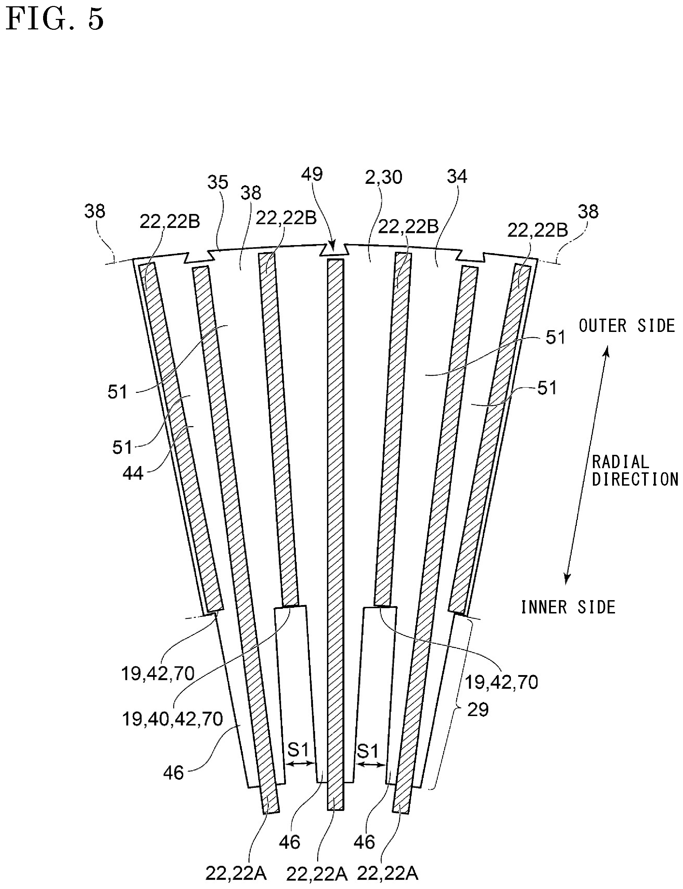

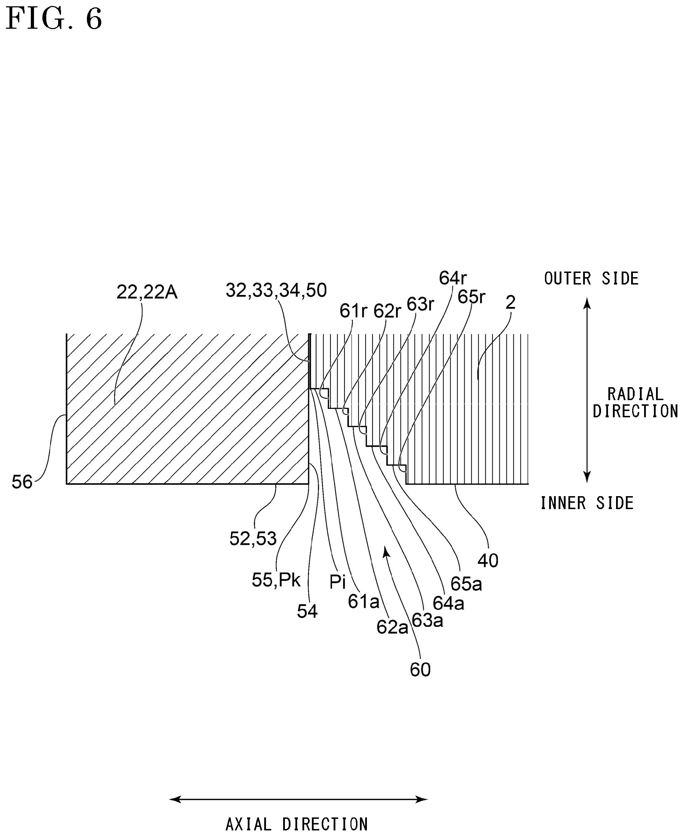

FIG. 5 is a view showing the positional relationship between the plurality of end duct spacers 22 and the end surface 34 of the stator core 2 when a surface V indicated by a broken line is viewed from an arrow A in FIG. 3, i.e., a view showing the arrangement between the plurality of end duct spacers 22 and the end surface 34 of the stator core 2 when viewed, along the axial direction, from an outer side (a side opposite the stator core 2 across the end duct spacers 22) in the axial direction. FIG. 6 is an enlarged view of an X part in FIG. 3 (the inner circumferential end part at an abutment part between an end duct spacer 22 and the axial-direction end 33 of the stator core 2).

As shown in FIG. 5, the silicon steel sheets 30 of the stator core 2 may be configured by connecting, in the circumferential direction, a plurality of divided pieces 38 each having a substantially sector shape. As shown in FIG. 5, a plurality of slots 19 for installing the stator coils 3 are formed at intervals in the circumferential direction, in an inner circumferential surface 40 of the stator core 2. The stator core 2 includes a core back 44 and a teeth portion 29 composed of a plurality of projections 46 projecting from the inner circumferential surface of the core back 44 to the radial-direction inner side. Each of the projections 46 extends along the axial direction, and each of the slots 19 is formed between adjacent ones of the projections 46. The stator coils 3 (see FIG. 1) are embedded in the slots 19 and fixed inside the slots 19 by wedges (not shown). In an exemplary embodiment shown in FIG. 5, a groove 49 to which the key bar 23 (see FIG. 1) is fitted is formed in the outer circumferential surface of the stator core 2. Each of the sectional shapes of the groove 49 and the key bar 23 in a cross section orthogonal to the axial direction is a non-circular shape (a trapezoidal shape in the shown example). Thus, fitting the key bar 23 to the groove 49 prevents displacement of the stator core 2 in the circumferential direction.

The plurality of end duct spacers 22 include a plurality of first end duct spacers 22A each disposed at a position shifted from a range S1 where the slot 19 is formed in the circumferential direction (a position not overlapping the range S1 where the slot 19 is formed in the circumferential direction), and a plurality of second end duct spacers 22B each disposed at a position overlapping the range S1 where the slot 19 is formed in the circumferential direction. The first end duct spacers 22A and the second end duct spacers 22B are disposed alternately in the circumferential direction, and the length, in the radial direction, of the first end duct spacers 22A is longer than that of the second end duct spacers 22B.

In the shown exemplary embodiment, each of the plurality of first end duct spacers 22A extends along the radial direction from the vicinity of an outer circumferential edge 35 in the end surface 34 of the stator core 2, and is disposed at a position overlapping the core back 44 and the teeth portion 29 and not overlapping the slot 19 in an axial-direction view. Each of the plurality of second end duct spacers 22B extends along the radial direction from the vicinity of the outer circumferential edge 35 in the end surface 34 of the stator core 2, and is disposed at a position overlapping the core back 44 and not overlapping the teeth portion 29 or the slot 19 in an axial-direction view.

In the above-described configuration, the plurality of end duct spacers 22 are sandwiched between the end plate 36 and the stator core 2, and thus a plurality of passages 51 extending in the radial direction and partitioned by the plurality of end duct spacers are formed in a space between the end plate 36 and the stator core 2. The end surface 34 of the stator core 2 is cooled with hydrogen gas passing through the plurality of passages 51.

As shown in FIG. 6, if the innermost position in the radial direction, in a contact surface 50 contacting the plurality of end duct spacers 22 on the end surface 34 of the stator core 2, is denoted as a contact-surface inner end position Pi, an inner end 52 of the first end duct spacer 22A in the radial direction is positioned inward of the contact-surface inner end position Pi in the radial direction. In the shown exemplary embodiment, the sectional shape, along the axial direction, of the first end duct spacer 22A is rectangular, and the first end duct spacer 22A includes a side surface 54 facing the stator core 2 side and a side surface 56 facing the end plate 36 side (see FIG. 3). Each of the side surface 54 and the side surface 56 is a flat surface, and if the innermost position in the radial direction, in the side surface 54 (the position at which the side surface 54 and an end surface 53 on the radial-direction inner side of the first end duct spacer 22A are connected) is denoted as a side-surface inner end position Pk, the side-surface inner end position Pk is positioned inward of the contact-surface inner end position Pi in the radial direction. In other words, the end surface 53 on the inner side in the radial direction of the first end duct spacer 22A and the side surface 54 of the first end duct spacer form a corner 55, and the corner 55 is positioned inward of the contact-surface inner end position Pi in the radial direction. It is noted that the contact surface 50 is a surface of an insulating layer 32 on a silicon steel sheet 30 at one end in the axial direction among the plurality of silicon steel sheets 30 constituting the stator core 2, and said surface is a flat surface.

In an exemplary embodiment shown in FIG. 6, the end surface 34 and the inner circumferential surface 40 of the stator core 2 are connected, at the axial-direction end 33 of the stator core 2, by a stairway portion 60 including a plurality of steps. As shown in FIG. 6, the stairway portion 60 includes, in a cross section along the axial direction, a first-step axial-direction extension surface 61a extending along the axial direction from the contact-surface inner end position Pi on the end surface 34 of the stator core 2, a first-step radial-direction extension surface 61r extending inwardly in the radial direction from an end on the first-step axial-direction extension surface 61a, on a side opposite the end surface 34 of the stator core 2, a second-step axial-direction extension surface 62a extending along the axial direction from an inner end of the first-step radial-direction extension surface 61r in the radial direction, and a second-step radial-direction extension surface 62r extending inwardly in the radial direction from an end on the second-step axial-direction extension surface 62a, on a side opposite the first-step radial-direction extension surface 61r. In the exemplary embodiment shown in FIG. 6, the stairway portion 60 further includes a third-step axial-direction extension surface 63a extending along the axial direction from an inner end of the second-step radial-direction extension surface 62r in the radial direction, a third-step radial-direction extension surface 63r extending inwardly in the radial direction from an end on the third-step axial-direction extension surface 63a, on a side opposite the second-step radial-direction extension surface 62r, a fourth-step axial-direction extension surface 64a extending along the axial direction from an inner end of the third-step radial-direction extension surface 63r in the radial direction, a fourth-step radial-direction extension surface 64r extending inwardly in the radial direction from an end on the fourth-step axial-direction extension surface 64a, on a side opposite the fourth-step radial-direction extension surface 64r, a fifth-step axial-direction extension surface 65a extending along the axial direction from an inner end of the fourth-step radial-direction extension surface 64r in the radial direction, and a fifth-step radial-direction extension surface 65r extending inwardly in the radial direction from an end on the fifth-step axial-direction extension surface 65a, on a side opposite the fourth-step radial-direction extension surface 64r.

In some embodiments, as shown in FIG. 6, the inner end 52 of the first end duct spacer 22A in the radial direction may be positioned inward of the second-step axial-direction extension surface 62a in the radial direction. In the shown exemplary embodiment, the inner end 52 of the first end duct spacer 22A in the radial direction is positioned inward of the fifth-step axial-direction extension surface 65a in the radial direction.

In some embodiments, as shown in FIG. 5, an inner end 70 of the second end duct spacer 22B in the radial direction may be configured so as not to project inward of a bottom surface 42 of the slot 19 in the radial direction.

In some embodiments, as shown in, for example, FIG. 3, the inner end 52 of the first end duct spacer 22A in the radial direction may be configured so as not to project inward of an innermost end 2i of the stator core 2 in the radial direction.

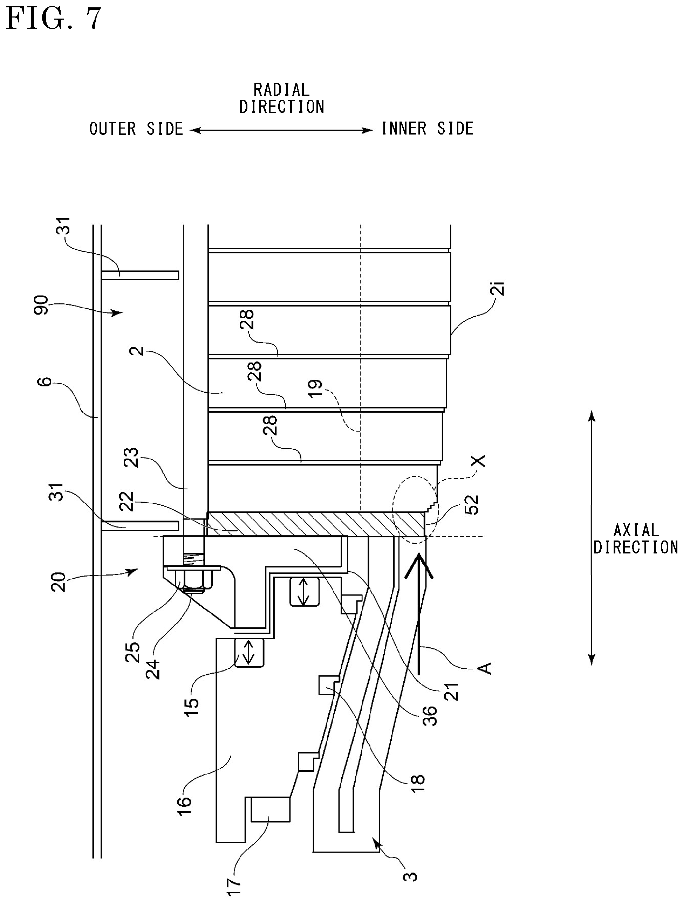

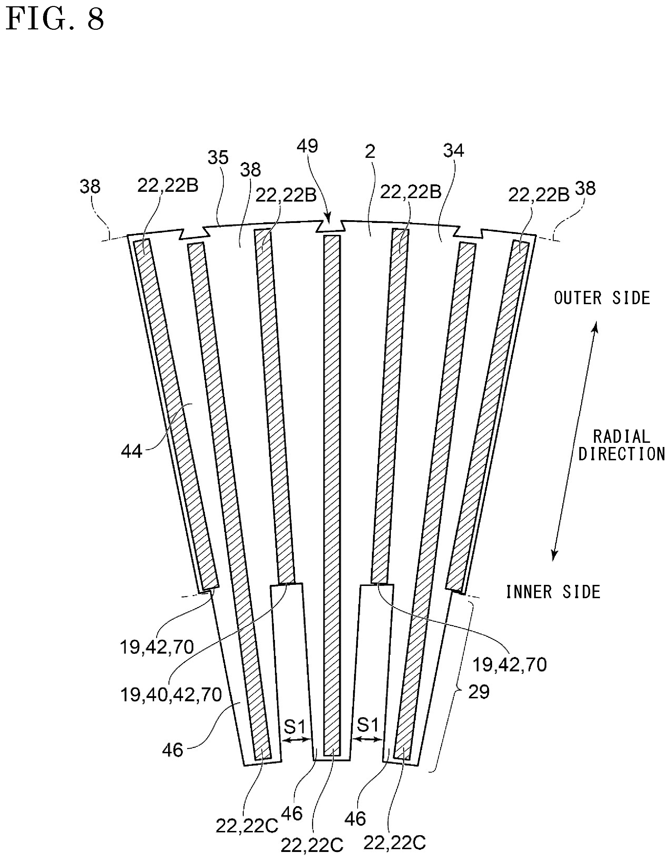

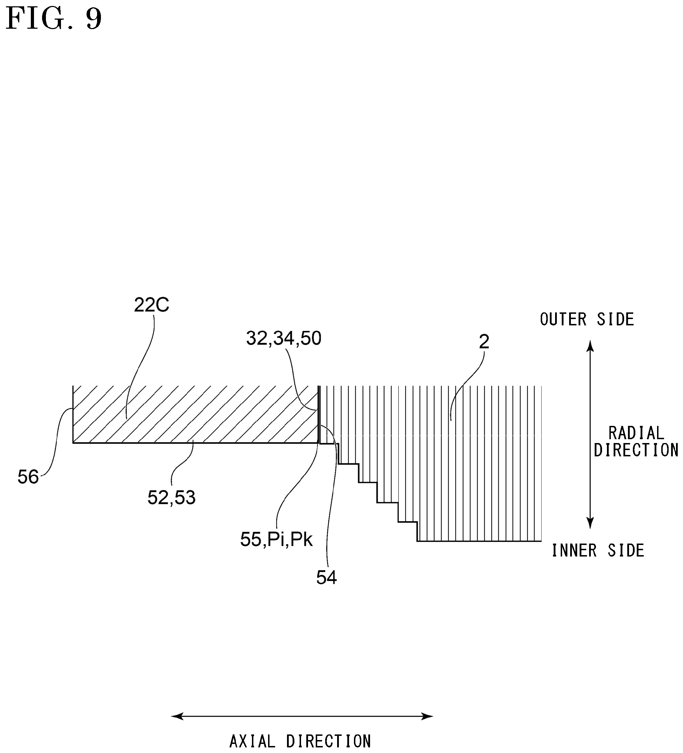

Here, the effects provided by the above-described stator core assembly 90 will be described in comparison with a comparative embodiment. FIG. 7 is a sectional view showing an axial-direction end structure of a rotary electric machine according to a comparative embodiment when a part of a cross section, along the axial direction, of the rotary electric machine is viewed from a lateral direction (a direction orthogonal to a vertical surface including the rotation axis of the rotary electric machine). FIG. 8 is a view showing the positional relationship between a plurality of end duct spacers 22 and an end surface 34 of a stator core 2 when a surface V indicated by a broken line is viewed in a direction from an arrow A in FIG. 7. FIG. 9 is an enlarged view of an X part in FIG. 7 (the inner circumferential end part at an abutment part between an end duct spacer 22 and an axial-direction end 33 of the stator core 2).

As shown in FIG. 7 to FIG. 9, in the rotary electric machine according to the comparative embodiment, the plurality of end duct spacers 22 include a plurality of first end duct spacers 22C each disposed at a position shifted from a range where a slot 19 is formed in the circumferential direction (a position not overlapping the range where the slot 19 is formed in the circumferential direction), and a plurality of second end duct spacers 22B each disposed at a position overlapping the range where the slot 19 is formed in the circumferential direction. The configuration of the first end duct spacer 22C is different from that of the first end duct spacer 22A of the above embodiment.

In the comparative embodiment shown in FIG. 7 to FIG. 9, the position of an inner end 52 of the first end duct spacer 22C coincides with the contact-surface inner end position Pi, and a corner 55 between an end surface 53 of the first end duct spacer 22C on the radial-direction inner side and a side surface 54 of the first end duct spacer 22C abuts on the end surface 34 of the stator core 2.

As a result, the inner end 52 of the first end duct spacer 22C in the radial direction (more specifically, the corner 55) might bite into the end surface 34 of the stator core 2 and damage an insulating layer 32 on the surface of the stator core 2.

In contrast, in the rotary electric machine 100 according to the above-described embodiment, the inner end 52 of the first end duct spacer 22A in the radial direction is positioned inward of the contact-surface inner end position Pi in the radial direction, whereby the inner end 52 of the first end duct spacer 22A (more specifically, the corner 55) is inhibited from biting into the contact surface 50 of the stator core 2, thus suppressing the breakage of the insulating layer 32 on the surface of the stator core 2 (the insulating layer 32 on the surface of the silicon steel sheet 30). Therefore, a short circuit between the first end duct spacer 22A and the silicon steel sheet 30 due to insulation breakdown between the first end duct spacer 22A and the silicon steel sheet 30 can be suppressed.

In addition, in the rotary electric machine 100 according to the above-described embodiment, the inner end 52 of the first end duct spacer 22A in the radial direction does not project inward of the innermost end 2i of the stator core 2 in the radial direction, whereby a short circuit between the first end duct spacer 22A and the silicon steel sheet 30 due to insulation breakdown between the first end duct spacer 22A and the silicon steel sheet 30 can be suppressed while suppressing an increase in risk of contact between the inner end 52 of the first end duct spacer 22A and the rotor 1.

Furthermore, in the rotary electric machine 100 according to the above-described embodiment, the inner end 52 of the second end duct spacer 22B in the radial direction does not project inward of the bottom surface 42 of the slot 19 in the radial direction. As a result, a short circuit between the first end duct spacer 22A and the silicon steel sheet 30 due to insulation breakdown between the first end duct spacer 22A and the silicon steel sheet 30 can be suppressed while avoiding interference between the stator coils 3 installed in the slots 19 and the second end duct spacer 22B.

Not limited to the above-described embodiments, the present disclosure includes modifications of the above-described embodiments and appropriate combinations thereof. In addition, the above-described embodiments are explained specifically for clear understanding of the present disclosure, which is not limited to the embodiments having all the explained configurations. Moreover, part of a configuration of each embodiment is removable, can add thereto part of the other configurations, and is replaceable with part of the other configurations.

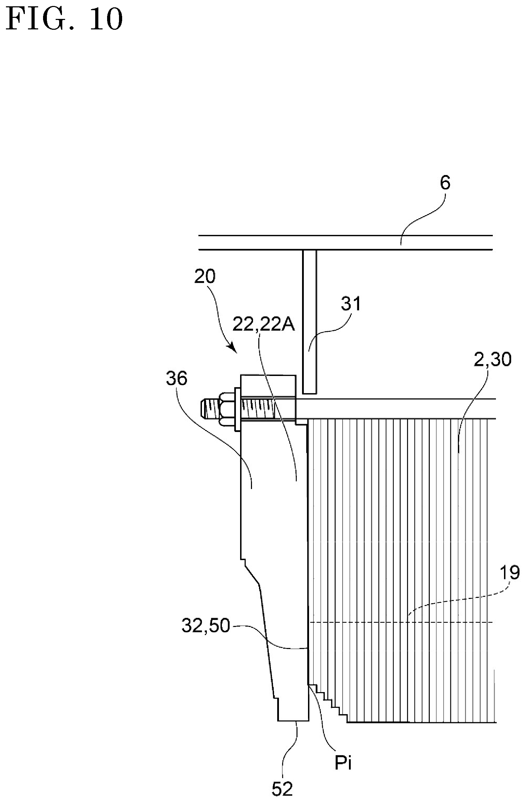

For example, as shown in FIG. 10, the plurality of end duct spacers 22 and the end plate 36 provided at the axial-direction end 33 of the stator core 2 may be configured integrally as one inseparable component as a whole, or may be, for example, integrally molded using a single material. This case is also configured such that, as in the above-described embodiment, the inner end 52 of the first end duct spacer 22A in the radial direction is positioned inward of the contact-surface inner end position Pi in the radial direction, whereby the inner end 52 of the first end duct spacer 22A (more specifically, the corner 55) is inhibited from biting into the contact surface 50 of the stator core 2, thus suppressing the breakage of the insulating layer 32 on the surface of the stator core 2 (the insulating layer 32 on the surface of the silicon steel sheet 30). Therefore, a short circuit between the first end duct spacer 22A and the silicon steel sheet 30 due to insulation breakdown between the first end duct spacer 22A and the silicon steel sheet 30 can be suppressed.

In the above-described embodiment, the silicon steel sheets are described as an example of electromagnetic steel sheets constituting the stator core 2, but the electromagnetic steel sheets are not limited to the silicon steel sheets and may be different electromagnetic steel sheets (magnetic steel sheets) that do not contain silicon.

The contents described in the above embodiments are understood as follows, for example.
[1] A stator core assembly (e.g., the above-described stator core assembly 90) according to at least one embodiment of the present disclosure is for a rotary electric machine (e.g., the above-described rotary electric machine 100), the stator core assembly including:
   a stator core (e.g., the above-described stator core 2) including a plurality of laminated electromagnetic steel sheets (e.g., the above-described silicon steel sheets 30), each electromagnetic steel sheet having an insulating layer (e.g., the above-described insulating layer 32) formed on both surfaces thereof; and
   a plurality of end duct spacers (e.g., the above-described plurality of end duct spacers 22) disposed at intervals in a circumferential direction of the rotary electric machine and pressing an end surface (e.g., the above-described end surface 34) on one side of the stator core in an axial direction of the rotary electric machine, wherein
   a plurality of slots (e.g., the above-described plurality of slots 19) for installing stator coils (e.g., the above-described stator coils 3) are formed in an inner circumferential surface of the stator core at intervals in the circumferential direction,
   the plurality of end duct spacers include a first end duct spacer (e.g., the above-described first end duct spacer 22A) disposed at a position shifted from a range (e.g., the above-described range S1) where each of the slots is formed in the circumferential direction, and
   if an innermost position in a radial direction of the rotary electric machine, in a contact surface (e.g., the above-described contact surface 50) contacting the plurality of end duct spacers on the end surface of the stator core, is denoted as a contact-surface inner end position (e.g., the above-described contact-surface inner end position Pi), an inner end (e.g., the above-described inner end 52) of the first end duct spacer in the radial direction is positioned inward of the contact-surface inner end position in the radial direction.

In the stator core assembly according to the [1] above, the inner end of the first end duct spacer in the radial direction is positioned inward of the contact-surface inner end position in the radial direction, whereby the inner end of the first end duct spacer is inhibited from biting into the contact surface of the stator core, thus suppressing the breakage of the insulating layer on a surface of the electromagnetic steel sheet. Therefore, a short circuit between the first end duct spacer and the electromagnetic steel sheet due to insulation breakdown between the first end duct spacer and the electromagnetic steel sheet can be suppressed.

[2] In some embodiments of the stator core assembly according to the [1] above, the end surface and the inner circumferential surface of the stator core are connected by a stairway portion (e.g., the above-described stairway portion 60) including a plurality of steps, at an end (e.g., the above-described axial-direction end 33) on the one side of the stator core in the axial direction,
the stairway portion includes, in a cross section along the axial direction, a first-step axial-direction extension surface (e.g., the above-described first-step axial-direction extension surface 61a) extending along the axial direction from the contact-surface inner end position on the end surface of the stator core, a first-step radial-direction extension surface (e.g., the above-described first-step radial-direction extension surface 61r) extending inwardly in the radial direction from an end on the first-step axial-direction extension surface, on a side opposite the end surface (e.g., the above-described end surface 34) of the stator core, a second-step axial-direction extension surface (e.g., the above-described second-step axial-direction extension surface 62a) extending along the axial direction from an inner end of the first-step radial-direction extension surface in the radial direction, and a second-step radial-direction extension surface (e.g., the above-described second-step radial-direction extension surface 62r) extending inwardly in the radial direction from an end on the second-step axial-direction extension surface, on a side opposite the first-step radial-direction extension surface, and
the inner end (e.g., the above-described inner end 52) of the first end duct spacer in the radial direction is positioned inward of the second-step axial-direction extension surface in the radial direction.

In the stator core assembly according to the [2] above, the inner end of the first end duct spacer in the radial direction is positioned inward of the second-step axial-direction extension surface, whereby the inner end of the first end duct spacer is inhibited from biting into the contact surface of the stator core, thus suppressing the breakage of the insulating layer on the surface of the electromagnetic steel sheet. Therefore, a short circuit between the first end duct spacer and the electromagnetic steel sheet due to insulation breakdown between the first end duct spacer and the electromagnetic steel sheet can be suppressed.

[3] In some embodiments of the stator core assembly according to the [1] or [2] above,
the inner end (e.g., the above-described inner end 52) of the first end duct spacer in the radial direction does not project inward of an innermost end (e.g., the above-described end 2i) of the stator core in the radial direction.

In the stator core assembly according to the [3] above, a short circuit between the first end duct spacer and the electromagnetic steel sheet due to insulation breakdown between the first end duct spacer and the electromagnetic steel sheet can be suppressed while suppressing an increase in risk of contact between the inner end of the first end duct spacer and the rotor.

[4] In some embodiments of the stator core assembly according to any one of the [1] to [3] above,
the plurality of end duct spacers include a second end duct spacer (e.g., the above-described second end duct spacer 22B) disposed at a position overlapping a range (e.g., the above-described range S1) where the slot is formed in the circumferential direction, and
an inner end (e.g., the above-described inner end 70) of the second end duct spacer in the radial direction does not project inward of a bottom surface (e.g., the above-described bottom surface 42) of the slot in the radial direction.

In the stator core assembly according to the [4] above, a short circuit between the end duct spacer and the electromagnetic steel sheet due to insulation breakdown between the first end duct spacer and the electromagnetic steel sheet can be suppressed while avoiding interference between the stator coils installed in the slots and the second end duct spacer.

[5] A rotary electric machine (e.g., the above-described rotary electric machine 100) according to at least one embodiment of the present disclosure includes the stator core assembly according to any one of the [1] to [4] above, and a rotor (e.g., the above-described rotor 1).

In the rotary electric machine according to the [5] above, a short circuit between the end duct spacer and the electromagnetic steel sheet due to insulation breakdown between the first end duct spacer and the electromagnetic steel sheet is suppressed, whereby local overheating at the stator core can be suppressed, thereby enabling stable running of the rotary electric machine.

### DESCRIPTION OF THE REFERENCE CHARACTERS

- 1: rotor
- 2: stator core
- 2i: end
- 3: stator coil
- 4: stator
- 5: high-voltage bushing
- 6: rotary electric machine casing
- 7: terminal box
- 8: hydrogen cooler
- 9: end bracket
- 10: rocker device
- 11: foot
- 12: current transformer
- 13: connection line
- 14: lead-out line
- 15: slide bearing
- 16: axial support
- 17: permanent ring
- 18: support ring
- 19: slot
- 20: core clamp
- 21: copper shield
- 22: end duct spacer
- 22A, 22C: first end duct spacer
- 22B: second end duct spacer
- 23: key bar
- 24: key bar bolt
- 25: key bar nut
- 26: wedge
- 27: damaged area in stator core 2
- 28: intermediate ducts
- 29: teeth portion
- 30: silicon steel sheet
- 31: stator main plate
- 32: insulating layer
- 33: axial-direction end
- 34, 53: end surface
- 35: outer circumferential edge
- 36: end plate
- 38: divided piece
- 40: inner circumferential surface
- 41: coil end support
- 42: bottom surface
- 44: core back
- 46: projection
- 49: groove
- 50: contact surface
- 51: passage
- 52,70: inner end
- 54,56: side surface
- 55: corner
- 60: stairway portion
- 61a: first-step axial-direction extension surface
- 61r: first-step radial-direction extension surface
- 62a: second-step axial-direction extension surface
- 62r: second-step radial-direction extension surface
- 63a: third-step axial-direction extension surface
- 63r: third-step radial-direction extension surface
- 64a: fourth-step axial-direction extension surface
- 64r: fourth-step radial-direction extension surface
- 65a: fifth-step axial-direction extension surface
- 65r: fifth-step radial-direction extension surface
- 90: stator core assembly
- 100: rotary electric machine

## Claims

1. A stator core assembly for a rotary electric machine, comprising:
a stator core including a plurality of laminated electromagnetic steel sheets, each electromagnetic steel sheet having an insulating layer formed on both surfaces thereof; and
a plurality of end duct spacers disposed at intervals in a circumferential direction of the rotary electric machine and pressing an end surface on one side of the stator core in an axial direction of the rotary electric machine, wherein
a plurality of slots for installing stator coils are formed in an inner circumferential surface of the stator core at intervals in the circumferential direction,
the plurality of end duct spacers include a first end duct spacer disposed at a position shifted from a range where each of the slots is formed in the circumferential direction, and
if an innermost position in a radial direction of the rotary electric machine, in a contact surface contacting the plurality of end duct spacers on the end surface of the stator core, is denoted as a contact-surface inner end position, an inner end of the first end duct spacer in the radial direction is positioned inward of the contact-surface inner end position in the radial direction.

2. The stator core assembly according to claim 1, wherein
the end surface and the inner circumferential surface of the stator core are connected, in the axial direction, by a stairway portion including a plurality of steps, at an end on the one side of the stator core,
the stairway portion includes, in a cross section along the axial direction, a first-step axial-direction extension surface extending along the axial direction from the contact-surface inner end position on the end surface of the stator core, a first-step radial-direction extension surface extending inwardly in the radial direction from an end on the first-step axial-direction extension surface, on a side opposite the end surface of the stator core, a second-step axial-direction extension surface extending along the axial direction from an inner end of the first-step radial-direction extension surface in the radial direction, and a second-step radial-direction extension surface extending inwardly in the radial direction from an end on the second-step axial-direction extension surface, on a side opposite the first-step radial-direction extension surface, and
the inner end of the first end duct spacer in the radial direction is positioned inward of the second-step axial-direction extension surface in the radial direction.

3. The stator core assembly according to claim 1, wherein the inner end of the first end duct spacer in the radial direction does not project inward of an innermost end of the stator core in the radial direction.

4. The stator core assembly according to claim 1, wherein
the plurality of end duct spacers include a second end duct spacer disposed at a position overlapping a range where the slot is formed in the circumferential direction, and
an inner end of the second end duct spacer in the radial direction does not project inward of a bottom surface of the slot in the radial direction.

5. A rotary electric machine comprising the stator core assembly according to any one of claims 1 to 4, and a rotor.
